Europäisches Patentamt

European Patent Office

Office européen des brevets

(19)

(11) EP 0 861 479 B1

# (12) FASCICULE DE BREVET EUROPEEN

(45) Date de publication et mention
de la délivrance du brevet:
**01.12.1999 Bulletin 1999/48**

(51) Int Cl.⁶: **G07F 7/10**, G06K 19/067,
H04L 9/22

(21) Numéro de dépôt: **96931864.1**

(22) Date de dépôt: **18.09.1996**

(86) Numéro de dépôt international:
**PCT/FR96/01446**

(87) Numéro de publication internationale:
**WO 97/11442 (27.03.1997 Gazette 1997/14)**

(54) **PROCEDE DE DETERMINATION D'UNE CLE DE CRYPTAGE ASSOCIEE A UN CIRCUIT INTEGRE**

VERFAHREN ZUM ERZEUGEN EINES MIT EINEM INTEGRIERTEN SCHALTKREIS VERSEHENEN VERSCHLÜSSELUNGSSCHLÜSSELS

METHOD FOR DETERMINING AN ENCRYPTION KEY ASSOCIATED WITH AN INTEGRATED CIRCUIT

(84) Etats contractants désignés:
**AT DE GB IT**

(30) Priorité: **19.09.1995 FR 9511078**
**05.04.1996 FR 9604436**

(43) Date de publication de la demande:
**02.09.1998 Bulletin 1998/36**

(73) Titulaire: **SCHLUMBERGER Systèmes**
**92120 Montrouge (FR)**

(72) Inventeurs:
• **RHELIMI, Alain**
**F-94230 Cachan (FR)**
• **RIGAL, Vincent**
**F-92330 Sceaux (FR)**
• **ROSE, René**
**30000 Nimes (FR)**

(56) Documents cités:
EP-A- 0 583 709          DE-A- 4 243 888
FR-A- 2 471 083          US-A- 3 636 318
US-A- 4 591 189

## Description

La présente invention concerne un procédé de détermination d'une clé de cryptage associée à un circuit intégré. Elle concerne également un circuit intégré sécurisé mettant en oeuvre ledit procédé.

L'invention trouve une application particulièrement avantageuse dans le domaine de la sécurisation des cartes à mémoire, notamment les cartes à mémoire utilisées en télévision cryptée.

D'une manière générale, les cartes à mémoire comportent un corps de carte en matériau plastique et un module électronique inséré dans une cavité aménagée dans ledit corps de carte. Le module électronique est constitué d'un circuit intégré, ou puce, placé sur un support lui-même muni de plages métalliques destinées à assurer la liaison électrique entre le module et un lecteur de cartes. Le circuit intégré peut être une mémoire du type EEPROM, pour l'application aux télécartes par exemple, ou un microprocesseur, pour les applications aux cartes bancaires, à la téléphonie mobile ou encore à la télévision cryptée.

La plupart des cartes à mémoire sont donc utilisées pour effectuer des transactions électroniques, ce qui naturellement ne manque de susciter la tentation de frauder les systèmes mettant en oeuvre des cartes à mémoire de manière à pouvoir bénéficier sans contrepartie financière des services fournis par ces systèmes.

Afin d'éviter, ou du mois de limiter la fraude, les informations échangées avec le module électronique des cartes à mémoire sont cryptées selon des procédés variés qui font l'objet d'une abondante littérature. Il suffit seulement de savoir que les messages reçus par les circuits intégrés des cartes sont chiffrés à l'aide de clés, dites clés de cryptage, stockées dans la mémoire non volatile des circuits. Ces clés peuvent elles-même être protégées contre une lecture extérieure en masquant le niveau du plan-mémoire dans lequel elles sont inscrites par plusieurs niveaux de métal faisant office d'écran tout en participant à la dynamique du circuit.

Toutefois, le degré de sécurisation obtenu n'est pas absolu car il est toujours possible pour un fraudeur expérimenté d'accéder aux clés secrètes par une analyse fonctionnelle du circuit intégré.

Le document EP-A-0583709 décrit un procédé de fabrication d'un nouveau type de cartes dans lesquelles de petites particules de métal ou de ferrite sont mélangées avec l'élément plastique qui servira de base support à la carte.
Chaque carte produite contient alors une distribution aléatoire différente.
Lors de la lecture de cette carte, cette distribution aléatoire donnera lieu à un nombre unique correspondant.

Aussi, le problème technique à résoudre par l'objet de la présente invention est de proposer un procédé de détermination d'une clé de cryptage associée à un circuit intégré présentant un plan-mémoire, procédé qui permettrait d'atteindre un niveau de protection des clés de cryptage beaucoup plus élevé du fait notamment d'un stockage statique des clés hors du plan-mémoire et donc inaccessible par analyse fonctionnelle du circuit.

La solution au problème technique posé consiste, selon la présente invention, en ce que ledit procédé comporte les étapes suivantes :

> (a) réaliser une matrice de N contacts électriques $C_i$ (i = 1, ..., N) à la surface dudit plan-mémoire,
> (b) déposer sur ladite matrice une couche d'un matériau à résistivité électrique inhomogène aléatoire,
> (c) déterminer ladite clé de cryptage, dite clé résistive Kr, à partir de la répartition aléatoire des résistances électriques reliant les différents contacts électriques $C_i$ de la matrice.

Ainsi, on utilise la structure résistivement aléatoire de ladite couche comme générateur de la clé Kr de cryptage associée au circuit intégré. Celle-ci n'est donc jamais stockée dans le plan-mémoire du circuit et, de ce fait, est reconstruite à chaque mise sous tension du circuit intégré. De plus, on peut observer que la couche de matériau réalise un écran qui protège le circuit contre toutes lectures frauduleuses. Si cette couche est enlevée ou altérée, la clé est modifiée et les informations demeureront cryptées à jamais. Il est impossible de lire par un moyen extérieur au circuit intégré les valeurs des résistances prises en compte par le procédé de l'invention pour déterminer la clé Kr de cryptage.

Un premier perfectionnement consiste à munir le circuit intégré d'un mécanisme d'alarme. Cela permet de détecter des tentatives de fraude et de prendre des mesures comme l'effacement d'informations sensibles.

A cet effet, selon l'invention, l'étape (c) comprend en outre la détermination, à l'initialisation du circuit intégré, d'une autre clé résistive KA, dite clé d'alarme, qui est inscrite dans une mémoire non volatile dudit circuit, et ladite deuxième clé résistive KA est mesurée, à chaque mise sous tension du circuit intégré, et comparée à la valeur de KA mémorisée, la clé Kr de cryptage étant effacée en cas de comparaison négative. Afin de fiabiliser ce mode de réalisation, plusieurs perfectionnements peuvent y être apportés :

- La clé KA est mesurée à partir de résistances sans corrélation avec celles utilisées pour déterminer la clé Kr, afin qu'on ne puisse déduire Kr de KA.
- La clé KA est mesurée plusieurs fois, jusqu'à un nombre maximal.
- A chaque mesure de KA, une information est inscrite dans la mémoire non volatile du circuit intégré, par exemple mise à jour du nombre d'essais encore autorisés s'il en reste.
- Plutôt que de stocker la clé KA dans sa totalité, on peut n'en stocker qu'un condensé (CRC, hashing) et faire un test de conformité.
- La clé résistive Kr n'est pas mesurée si la valeur mesurée de KA n'est pas conforme.

Un deuxième perfectionnement du procédé conforme à l'invention consiste en ce que l'étape (c) comprend en outre la détermination, à l'initialisation du circuit intégré, d'une autre clé résistive KS, dite clé de secours, qui est inscrite dans une mémoire non volatile dudit circuit, et en ce qu'une clé KD est calculée à partir des clés résistives Kr et KS d'une manière telle que la clé Kr de cryptage puisse être calculée à partir des clés KS et KD, la clé KD étant inscrite dans la mémoire non volatile du circuit intégré.

A titre d'exemple, lesdits moyens de calcul peuvent être un "ou exclusif", on a dans ce cas :

$$KD = Kr + KS$$

et

$$Kr = KD + KS$$

Le circuit intégré peut être muni d'un mécanisme permettant de vérifier la valeur Kr. On peut utiliser notamment un mécanisme à base de somme de contrôle (check-sum) calculée par le circuit intégré et stockée dans sa mémoire. Il est essentiel qu'il soit impossible de déduire la clé Kr de cette somme de contrôle. Il est donc préférable que la longueur de la somme de contrôle soit très courte par rapport à celle de la clé Kr.

Lors de la mise en route du dispositif, la pastille considérée vérifie la clé Kr. Si le résultat n'est pas satisfaisant, elle recherche la clé de secours KS et est alors en mesure de rétablir Kr connaissant KD. Ceci constitue un mécanisme de recouvrement en cas d'erreur de mesure ou de dérive de Kr.

Il est également prévu que le circuit intégré, au moment où il détecte que Kr est erronée, en informe le monde extérieur. Ceci peut permettre de fonctionner en mode dégradé, avec KS, tout en préparant le remplacement du circuit intégré. Il est également possible de limiter le mode dégradé dans le temps, le circuit s'invalidant lui-même après un certain nombre d'utilisations en mode dégradé.

Selon un mode de réalisation particulier de l'invention, le circuit intégré dispose d'une information CI qui lui est propre, définissant une liste des résistances à utiliser pour la détermination desdites clés résistives Kr, KA, KS. De cette manière, l'attaque par usinage est également rendue inopérante car le fraudeur ne saura pas déduire la clé résistive Kr de la carte des résistances.

Selon une variante de ce dernier mode de réalisation, les moyens de mesure ne mesurent que les résistances utiles dont la liste dépend de l'information CI.

Selon un autre mode de mise en oeuvre de l'invention, la liste des résistances à utiliser est établie par le circuit intégré, lors de l'initialisation, en fonction des résistances mesurées. Ladite liste est inscrite dans une mémoire non volatile du circuit et vient compléter l'information CI ou en tient lieu. Bien entendu, après initialisation du circuit intégré, toute inscription de listes dans ladite mémoire non volatile est inhibée, par exemple par un fusible physique ou logique.

Selon un premier exemple d'application, ladite liste comporte des résistances de valeurs suffisamment éloignées. Ceci évite qu'un changement mineur des valeurs de résistances ne viennent modifier la clé résistive Kr.

Selon un deuxième exemple d'application, ladite liste comporte des résistances de valeurs de même ordre de grandeur. Ceci évite qu'un fraudeur vienne mesurer, par des sondes de surface, les résistances de la couche, et puisse en déduire la clé résistive Kr.

Enfin, il peut également être prévu que ladite liste comporte des résistances de valeurs contenues dans une plage donnée, pour cumuler les deux exemples précédents.

Afin d'améliorer encore le degré de sécurisation conféré par le procédé conforme à l'invention, il est prévu qu'il comporte à la suite de l'étape (b) une étape consistant à disposer un écran métallique sur ladite couche de matériau à résistivité électrique inhomogène aléatoire.

Selon un mode de mise en oeuvre particulier du procédé selon l'invention, on réalise ledit matériau à résistivité électrique inhomogène aléatoire en mélangeant une encre à faible résistivité électrique à une encre à forte résistivité électrique.

Enfin, un circuit intégré sécurisé présentant un plan-mémoire est remarquable, selon la présente invention, en ce qu'il comporte une matrice de N contacts électriques $C_i$ (i=1, ..., N) à la surface dudit plan-mémoire, une couche d'un matériau à résistivité électrique inhomogène aléatoire, déposée sur ladite matrice, et des moyens de détermination d'une clé Kr de cryptage, dite clé résistive, à partir de la répartition aléatoire des résistances électriques reliant les différents contacts électriques $C_i$ de la matrice.

La description qui va suivre en regard des dessins annexés, donnés à titre d'exemples non limitatifs, fera bien comprendre en quoi consiste l'invention et comment elle peut être réalisée.

La figure 1 est une vue de côté d'un circuit intégré sécurisé par la mise en oeuvre du procédé selon l'invention.

La figure 2 est une vue de dessus du circuit intégré de la figure 1.

La figure 3 est un schéma de moyens de détermination d'une clé de cryptage associée au circuit intégré des figures 1 et 2. La figure 4 est le schéma équivalent des moyens de détermination de la figure 3.

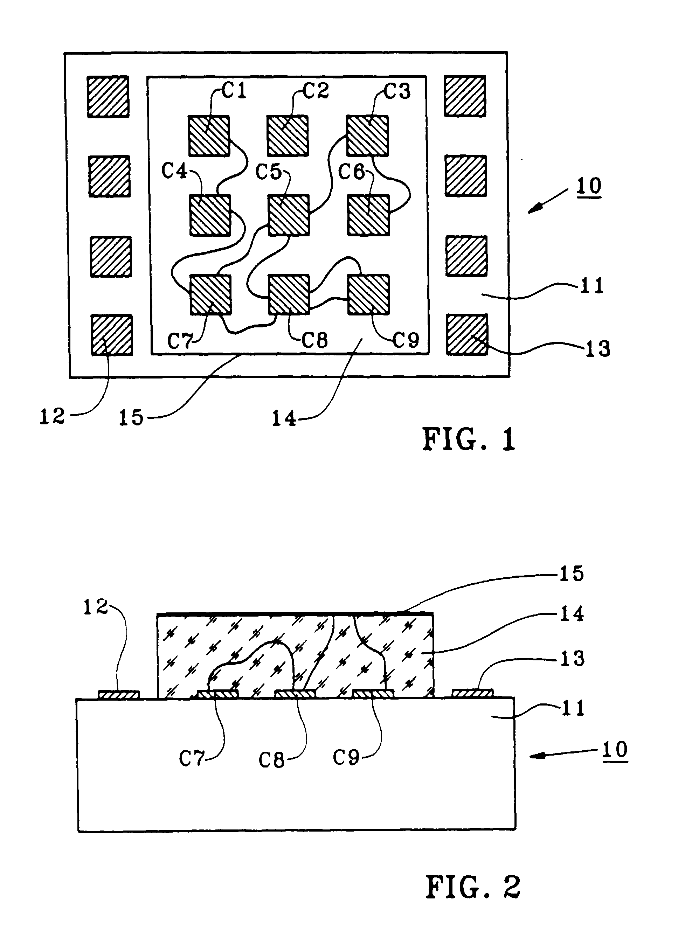

Le circuit intégré 10 montré aux figures 1 et 2 présente un plan-mémoire 11, ou face active, sur lequel sont formés des plots métalliques d'entrée/sortie, tels que 12 et 13 sur les figures 1 et 2, destinés à être reliés par des fils conducteurs aux plages métalliques d'un support, non représenté, qui constitue avec le circuit intégré 10 le module électronique d'une carte à mémoire.

Comme on peut le voir sur les figures 1 et 2, une matrice de N, ici 9, contacts électriques $C_i$ (i = 1,..., 9) a été réalisée à la surface du plan-mémoire 11 du circuit 10. Cette matrice de contacts électriques est recouverte, par sérigraphie par exemple, d'une couche 14 d'un matériau à résistivité électrique inhomogène aléatoire, tel qu'un mélange d'une encre à faible résistivité électrique avec une encre à forte résistivité électrique. La couche 14 de matériau a, par exemple, une épaisseur de l'ordre de 10 μm au plus.

Ainsi que le montrent les figures 1 et 2, les chemins de courant entre les différents contacts électriques $C_i$ de la matrice peuvent prendre des formes très variées résultant de la structure aléatoire de la résistivité électrique à l'intérieur de la couche 14. C'est cette répartition aléatoire des résistances électriques entre les contacts $C_i$ qui constitue la base du procédé de détermination d'une clé Kr de cryptage, dite clé résistive, associée au circuit intégré 10, ladite clé étant en quelque sorte une expression numérisée de la répartition des résistances, comme cela sera expliqué en détail plus loin.

Notons que la clé Kr de cryptage du circuit étant finalement contenue dans la couche 14 de matériau, il y a avantage à protéger ladite couche en la recouvrant d'un écran métallique 15 qui peut d'ailleurs participer lui-même à l'établissement des chemins de courant comme l'indique la figure 2.

De même que la couche 14, l'écran métallique 15 peut avoir une épaisseur de 10 μm (à cet égard le dessin de la figure 2 n'est pas à l'échelle).

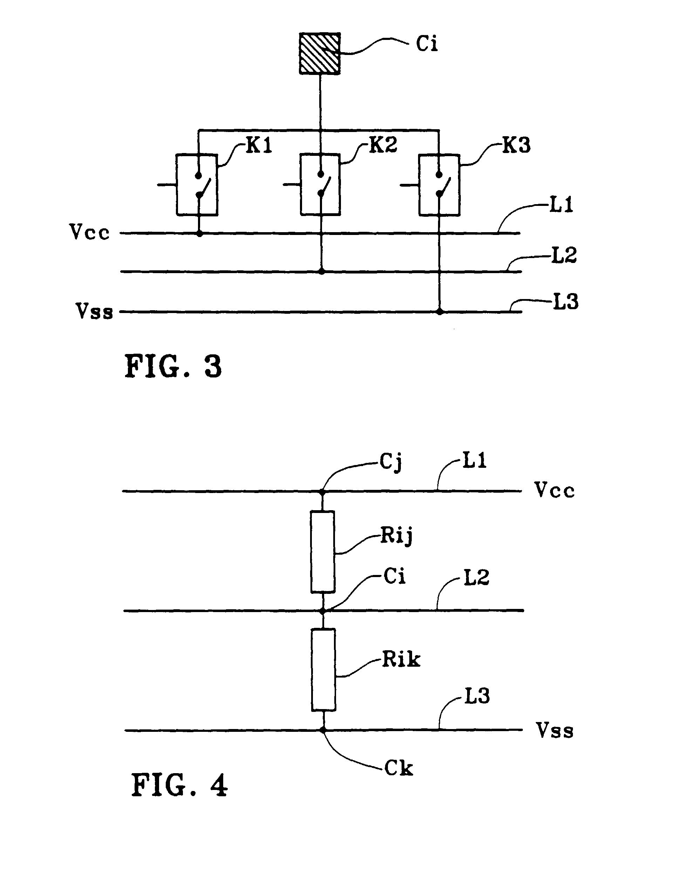

On a représenté sur la figure 3 un schéma des moyens utilisés pour la détermination de la clé Kr de cryptage appliquée à la structure de circuit des figures 1 et 2.

Ces moyens de détermination comportent un bus comprenant une ligne $L_1$ à une première tension $V_{cc}$, une ligne $L_2$ de mesure et une ligne $L_3$ à une deuxième tension $V_{ss}$. Chaque ligne $L_1$, $L_2$, $L_3$ du bus peut être reliée à un contact électrique de la matrice par l'intermédiaire de trois interrupteurs analogiques commandables $K_1$, $K_2$, $K_3$ respectivement. En d'autres termes, chaque contact $C_i$ peut être connecté à une et une seule des lignes $L_1$, $L_2$, $L_3$ du bus.

Le circuit intégré 10 commande les interrupteurs analogiques $K_1$, $K_2$, $K_3$ de manière à définir un ensemble de triplets de contacts électriques noté $(C_j, C_i, C_k)_l$, au nombre de M (l = 1, ..., M), les contacts $C_j$, $C_i$ et $C_k$ étant respectivement reliés aux lignes $L_1$, $L_2$, $L_3$ du bus. On obtient alors le circuit équivalent de la figure 4 dans laquelle $R_{ij}$ et $R_{ik}$ représentent les résistances électriques reliant le contact $C_i$ aux contacts $C_j$ et $C_k$ respectivement. Le choix des contacts $C_j$, $C_i$, $C_k$ est déterminé soit à partir d'une information $C_l$, propre au circuit 10, soit à partir d'une liste inscrite dans la mémoire non volatile du circuit.

De manière à pouvoir effectuer une comparaison significative des résistances Rij et Rik, il y a avantage à ce que, pour chaque triplet $(C_j, C_i, C_k)_l$, les contacts $C_j$ et $C_k$ soient équidistants du contact $C_i$, Dans ce cas, les résistances $R_{ij}$ et $R_{ik}$, bien qu'équivalentes, sont en général différentes du fait de l'inhomogénéité aléatoire de la résistivité électrique de la couche 14 de matériau. On utilise alors cette différence pour affecter à chaque triplet $(C_j, C_i, C_k)_l$ un bit $b_l$ défini par convention par :

$$b_l = 1 \qquad si\ R_{ij} > R_{ik}$$

$$b_l = 0 \qquad si\ R_{ij} < R_{ik}$$

On a ainsi un ensemble aléatoire de M bits $b_1$ qui, rangés selon une suite ordonnée, détermine la clé Kr de cryptage à attribuer au circuit intégré 10.

En pratique, la tension de la ligne $L_2$ de mesure est comparée à $(V_{cc} + V_{ss})/2$, le signe de cette comparaison permettant d'établir l'information logique $b_l$. Cette technique de mesure de résistance relative a l'avantage de s'affranchir des variations de température et de tension.

Il faut également noter que les résistances additionnelles de mesure doivent être très faibles pour ne pas diminuer l'influence de la dispersion des résistances non homogènes à mesurer. En effet, les canaux de mesure ont eux-même des dispersions qui, si elles devenaient trop importantes, rendraient insuffisantes l'influence et la modification de la couche 14 de matériau, ce qui ouvrirait une possibilité de fraude.

Dans l'exemple de la matrice 3 x 3 des figures 1 et 2, les triplets satisfaisant la condition d'équidistance sont :

$(C_1, C_2, C_3)_1$, $(C_4, C_5, C_6)_2$, $(C_7, C_8, C_9)_3$
$(C_4, C_1, C_2)_4$, $(C_2, C_3, C_6)_5$, $(C_8, C_9, C_6)_6$, $(C_4, C_7, C_8)_7$
$(C_1, C_4, C_7)_8$, $(C_2, C_5, C_8)_9$, $(C_3, C_6, C_9)_{10}$
$(C_1, C_5, C_9)_{11}$, $(C_7, C_5, C_3)_{12}$,
$(C_1, C_7, C_9)_{13}$, $(C_1, C_3, C_9)_{14}$,
$(C_2, C_7, C_9)_{15}$, $(C_1, C_8, C_3)_{16}$,
$(C_2, C_4, C_8)_{17}$, $(C_2, C_6, C_8)_{18}$

On obtient alors 18 bits $b_l$ associés chacun à un des 18 triplets, d'où une clé de cryptage à 18 bits.

Au besoin, la clé Kr obtenue peut être corrigée par un code correcteur d'erreur stocké en mémoire à la personnalisation de la carte. Toutefois, ce code ne permet pas de retrouver la clé si on ne dispose pas de la clé initiale.

Les autres clés résistives, à savoir la clé KA d'alarme et la clé KS de secours, sont déterminées de la même manière, le choix des contacts $C_j$, $C_i$, $C_k$ étant différent.

**Revendications**

1. Procédé de détermination d'une clé de cryptage associée à un circuit intégré (10) présentant un plan-mémoire (11), caractérisé en ce que ledit procédé comporte les étapes suivantes :

   (a) réaliser une matrice de N contacts électriques $C_i$ ($i = 1, ..., N$) à la surface dudit plan-mémoire (11),
   (b) déposer sur ladite matrice une couche (14) d'un matériau à résistivité électrique inhomogène aléatoire,
   (c) déterminer ladite clé de cryptage, dite clé résistive Kr, à partir de la répartition aléatoire des résistances électriques reliant les différents contacts électriques $C_i$ de la matrice.

2. Procédé selon la revendication 1, caractérisé en ce que l'étape (c) comprend en outre la détermination, à l'initialisation du circuit intégré (10), d'une autre clé résistive KA, dite clé d'alarme, qui est inscrite dans une mémoire non volatile dudit circuit (10), et en ce que ladite deuxième clé résistive KA d'alarme est mesurée à chaque mise sous tension du circuit intégré (10), et comparée à la valeur de KA mémorisée, la clé Kr de cryptage étant effacée en cas de comparaison négative.

3. Procédé selon la revendication 2, caractérisé en ce que l'étape (c) comprend en outre la détermination, à l'initialisation du circuit intégré (10), d'une autre clé résistive KS, dite clé de secours, qui est inscrite dans une mémoire non volatile dudit circuit (10), et en ce qu'une clé KD est calculée à partir des clés résistives Kr et KS d'une manière telle que la clé Kr de cryptage puisse être calculée à partir des clés KS et KD, la clé KD étant inscrite dans la mémoire non volatile du circuit intégré (10).

4. Procédé selon l'une quelconque des revendications 1 à 3, caractérisé en ce que le circuit intégré (10) dispose d'une information CI qui lui est propre, définissant la liste des résistances à utiliser pour la détermination desdites clés résistives (Kr, KA, KS).

5. Procédé selon l'une quelconque des revendications 1 à 4, caractérisé en ce que la liste des résistances à utiliser est établie par le circuit intégré (10), lors de l'initialisation, en fonction des résistances mesurées.

6. Procédé selon la revendication 5, caractérisé en ce que ladite liste est inscrite dans une mémoire non volatile du circuit intégré (10).

7. Procédé selon la revendication 6, caractérisé en ce que, après initialisation du circuit intégré (10), toute inscription de listes dans ladite mémoire non volatile est inhibée.

8. Procédé selon l'un quelconque des revendications 5 à 7, caractérisé en ce que ladite liste comporte des résistances de valeurs suffisamment éloignées.

9. Procédé selon l'une quelconque des revendications 5 à 7, caractérisé en ce que ladite liste comporte des résistances de valeurs de même ordre de grandeur.

10. Procédé selon l'une quelconque des revendications 5 à 7, caractérisé en ce que ladite liste comporte des résistances de valeurs contenues dans une plage donnée.

11. Procédé selon l'une quelconque des revendications 2 à 10, caractérisé en ce que l'étape (c) de détermination desdites clés résistives (Kr, KA, KS) consiste, après avoir défini un ensemble de M triplets $(C_j, C_i, C_k)_1$ ($I = 1, ..., M$) de contacts électriques, à :

    - affecter à chaque triplet un bit $b_I$ défini par convention par :

    $$b_I = 1 \qquad si\ R_{ij} > R_{ik}$$

    $$b_I = 0 \qquad si\ R_{ij} < R_{ik}$$

    $R_{ij}$ et $R_{ik}$ étant les résistances électriques reliant le contact $C_i$ aux contacts $C_j$ et $C_k$ respectivement,
    - construire la clé résistive (Kr, KA, KS) sous la forme d'une suite ordonnée des M bits $b_I$.

12. Procédé selon la revendication 11, caractérisé en ce que pour chaque triplet $(C_j, C_i, C_k)_I$ les contacts $C_j$ et $C_k$ sont équidistants du contact $C_i$.

13. Procédé selon l'une quelconque des revendications 1 à 12, caractérisé en ce qu'il comporte à la suite de l'étape (b) une étape consistant à déposer un écran métallique (15) sur ladite couche (14) de matériau à résistivité électrique inhomogène aléatoire.

14. Procédé selon l'une quelconque des revendications 1 à 13, caractérisé en ce qu'on réalise ledit matériau à résistivité électrique inhomogène aléatoire en mélangeant une encre à faible résistivité électrique à une encre à forte résistivité électrique.

15. Circuit intégré sécurisé présentant un plan-mémoire (11), caractérisé en ce qu'il comporte une matrice de N contacts électriques $C_i$ ($i = 1, ..., N$) à la surface dudit plan-mémoire (11), une couche (14) d'un matériau à résistivité électrique inhomogène aléatoire, déposée sur ladite matrice, et des moyens de détermination d'une clé de cryptage à partir de la répartition aléatoire des résistances électriques reliant les différents contacts électriques $C_i$ de la matrice.

16. Circuit intégré sécurisée selon la revendication 15, caractérisée en ce que lesdits moyens de détermination sont aptes à déterminer, à l'initialisation dudit circuit (10), une clé Kr de cryptage, dite clé résistive.

17. Circuit intégré sécurisé selon la revendication 16, caractérisé en ce que lesdits moyens de détermination sont également aptes à déterminer, à l'initialisation dudit circuit (10), une autre clé résistive KA dite clé d'alarme, pour la mise en oeuvre du procédé selon la revendication 2.

18. Circuit intégré sécurisé selon l'une des revendications 16 ou 17, caractérisé en ce que lesdits moyens de détermination sont également aptes à déterminer, à l'initialisation de circuit (10), une autre clé résistive KS, dite clé de secours, pour la mise en oeuvre du procédé selon la revendication 3.

19. Circuit intégré sécurisé selon l'une quelconque des revendications 15 à 18, caractérisé en ce que lesdits moyens de détermination desdites clés résistives (Kr, KA, KS) sont aptes, après avoir défini un ensemble de M triplets $(C_j, C_i, C_k)_l$ $(l = 1, ..., M)$ de contacts électriques, à :

- affecter à chaque triplet un bit $b_l$ défini par convention par :

$$b_l = 1 \qquad si\ R_{ij} > R_{ik}$$

$$b_l = 0 \qquad si\ R_{ij} < R_{ik}$$

$R_{ij}$ et $R_{ik}$ étant les résistances électriques reliant le contact $C_i$ aux contacts $C_j$ et $C_k$ respectivement,
- construire la clé résistive (Kr, KA, KS) sous la forme d'une suite ordonnée des M bits $b_l$.

20. Circuit intégré sécurisé selon la revendication 19, caractérisé en ce que pour chaque triplet $(C_j, C_i, C_k)_l$ les contacts $C_j$ et $C_k$ sont équidistants du contact $C_i$.

21. Circuit intégré sécurisé selon l'une des revendications 19 ou 20, caractérisé en ce que lesdits moyens de détermination des clés résistives comportent, d'une part, un bus comprenant une ligne $(L_1)$ à une première tension $V_{cc}$, une ligne $(L_2)$ de mesure et une ligne $(L_3)$ à une deuxième tension $V_{ss}$, d'autre part, et trois interrupteurs analogiques commandables $(K_1, K_2, K_3)$ destinés à relier chaque contact $C_i$ à l'une des lignes $(L_1, L_2, L_3)$.

22. Circuit intégré sécurisé selon l'une quelconque des revendications 15 à 21, caractérisé en ce que ladite couche (14) de matériau à résistivité électrique inhomogène aléatoire est recouverte d'un écran métallique (15).

23. Circuit intégré sécurisé selon l'une quelconque des revendications 15 à 22, caractérisé en ce que ledit matériau à résistivité électrique inhomogène aléatoire est un mélange d'une encre à forte résistivité électrique et d'une encre à faible résistivité électrique.

**Patentansprüche**

1. Verfahren zum Bestimmen eines Verschlüsselungsschlüssels, der einer integrierten Schaltung (10) zugeordnet ist, die eine Speicherebene (11) aufweist, dadurch gekennzeichnet, daß das Verfahren die folgenden Schritte umfaßt:

(a) Herstellen einer Matrix aus N elektrischen Kontakten $C_i$ (i = 1, ..., N) auf der Oberfläche der Speicherebene (11),
(b) Ablagern einer Schicht (14) aus einem Material mit zufälligem, inhomogenen spezifischen elektrischen Widerstand auf der Matrix,
(c) Bestimmen des Verschlüsselungsschlüssels, Widerstandsschlüssel Kr genannt, anhand der Zufallsverteilung der elektrischen Widerstände, die die verschiedenen elektrischen Kontakte $(C_i)$ der Matrix verbinden.

2. Verfahren nach Anspruch 1, dadurch gekennzeichnet, daß der Schritt (c) außerdem bei der Initialisierung der integrierten Schaltung (10) die Bestimmung eines weiteren Widerstandsschlüssels KA, Alarmschlüssel genannt, der in einen nichtflüchtigen Speicher der Schaltung (10) geschrieben wird, umfaßt und daß der zweite Alarm-Widerstandsschlüssel KA bei jedem Anlegen von Spannung an die integrierte Schaltung (10) gemessen und mit dem gespeicherten Wert von KA verglichen wird, wobei der Verschlüsselungsschlüssel Kr bei negativem Vergleich gelöscht wird.

3. Verfahren nach Anspruch 2, dadurch gekennzeichnet, daß der Schritt (c) außerdem bei der Initialisierung der integrierten Schaltung (10) die Bestimmung eines weiteren Widerstandsschlüssels KS, der Hilfsschlüssel genannt, der in einen nichtflüchtigen Speicher der Schaltung (10) geschrieben wird, umfaßt und daß ein Schlüssel KD anhand der Widerstandsschlüssel Kr und KS in der Weise berechnet wird, daß der Verschlüsselungsschlüssel Kr anhand der Schlüssel KS und KD berechnet werden kann, wobei der Schlüssel KD in den nichtflüchtigen Speicher der integrierten Schaltung (10) geschrieben wird.

4. Verfahren nach einem der Ansprüche 1 bis 3, dadurch gekennzeichnet, daß die integrierte Schaltung (10) über eine ihr eigene Information CI verfügt, die die Liste der Widerstände definiert, die für die Bestimmung der Widerstandsschlüssel (Kr, KA, KS) zu verwenden sind.

5. Verfahren nach einem der Ansprüche 1 bis 4, dadurch gekennzeichnet, daß die Liste der zu verwendenden Widerstände durch die integrierte Schaltung (10) bei der Initialisierung in Abhängigkeit von den gemessenen Widerständen gebildet wird.

6. Verfahren nach Anspruch 5, dadurch gekennzeichnet, daß die Liste in einen nichtflüchtigen Speicher der integrierten Schaltung (10) geschrieben wird.

7. Verfahren nach Anspruch 6, dadurch gekennzeichnet, daß nach der Initialisierung der integrierten Schaltung (10) jegliches Schreiben von Listen in den nichtflüchtigen Speicher gesperrt ist.

8. Verfahren nach einem der Ansprüche 5 bis 7, dadurch gekennzeichnet, daß die Liste Widerstände mit ausreichend beabstandeten Werten enthält.

9. Verfahren nach einem der Ansprüche 5 bis 7, dadurch gekennzeichnet, daß die Liste Widerstände mit Werten derselben Größenordnung enthält.

10. Verfahren nach einem der Ansprüche 5 bis 7, dadurch gekennzeichnet, daß die Liste Widerstände mit Werten enthält, die in einem gegebenen Bereich enthalten sind.

11. Verfahren nach einem der Ansprüche 2 bis 10, dadurch gekennzeichnet, daß der Schritt (c) des Bestimmens der Widerstandsschlüssel (Kr, KA, KS) nach einer Definition einer Gesamtheit von M Tripeln $(C_j, C_i, C_k)_l$ (l = 1, ..., M) von elektrischen Kontakten darin besteht:

- jedem Tripel ein Bit $b_l$ zuzuweisen, das nach Konvention definiert ist durch:

$$b_l = 1, \text{ falls } R_{ij} > R_{ik}$$

$$b_l = 0, \text{ falls } R_{ij} < R_{ik}$$

wobei $R_{ij}$ und $R_{ik}$ elektrische Widerstände sind, die den Kontakt $C_i$ mit den Kontakten $C_j$ bzw. $C_k$ verbinden,

- den Widerstandsschlüssel (Kr, KA, KS) in Form einer geordneten Folge von M Bits $b_l$ zu konstruieren.

12. Verfahren nach Anspruch 11, dadurch gekennzeichnet, daß für jedes Tripel $(C_j, C_i, C_k)_l$ die Kontakte $C_j$ und $C_k$ vom Kontakt $C_i$ gleich beabstandet sind.

13. Verfahren nach einem der Ansprüche 1 bis 12, dadurch gekennzeichnet, daß es nach dem Schritt (b) einen Schritt umfaßt, der darin besteht, einen Metallschirm (15) auf die Schicht (14) aus dem Material mit zufälligem, inhomogenen spezifischen elektrischen Widerstand anzubringen.

14. Verfahren nach einem der Ansprüche 1 bis 13, dadurch gekennzeichnet, daß das Material mit zufälligem, inhomogenen spezifischen elektrischen Widerstand dadurch hergestellt wird, daß eine Tinte mit geringem spezifischen elektrischen Widerstand mit einer Tinte mit hohem spezifischen elektrischen Widerstand vermischt wird.

15. Gesicherte integrierte Schaltung, die eine Speicherebene (11) aufweist, dadurch gekennzeichnet, daß sie eine Matrix aus N elektrischen Kontakten $C_i$ (i = 1, ..., N) auf der Oberfläche der Speicherebene (11), eine Schicht (14) aus einem Material mit zufälligem, inhomogenen spezifischen elektrischen Widerstand, die auf der Matrix abgelagert ist, sowie Mittel zum Bestimmen eines Verschlüsselungsschlüssels anhand der Zufallsverteilung der elektrischen Widerstände, die die verschiedenen elektrischen Kontakte $C_i$ der Matrix miteinander verbinden, enthält.

16. Gesicherte integrierte Schaltung nach Anspruch 15, dadurch gekennzeichnet, daß die Bestimmungsmittel so beschaffen sind, daß sie bei der Initialisierung der Schaltung (10) einen Verschlüsselungsschlüssel Kr, Widerstandsschlüssel genannt, bestimmen.

17. Gesicherte integrierte Schaltung nach Anspruch 16, dadurch gekennzeichnet, daß die Bestimmungsmittel außerdem so beschaffen sind, daß sie bei der Initialisierung der Schaltung (10) einen weiteren Widerstandsschlüssel KA, Alarmschlüssel genannt, für die Ausführung des Verfahrens nach Anspruch 2 bestimmen.

18. Gesicherte integrierte Schaltung nach einem der Ansprüche 16 oder 17, dadurch gekennzeichnet, daß die Bestimmungsmittel außerdem so beschaffen sind, daß sie bei der Initialisierung der Schaltung (10) einen weiteren Widerstandsschlüssel KS, Hilfssschlüssel genannt, für die Ausführung des Verfahrens nach Anspruch 3 bestimmen.

19. Gesicherte integrierte Schaltung nach einem der Ansprüche 15 bis 18, dadurch gekennzeichnet, daß die Mittel zum Bestimmen der Widerstandsschlüssel (Kr, KA, KS) so beschaffen sind, daß sie nach der Definition einer Gesamtheit von M Tripeln $(C_j, C_i, C_k)_l$ $(l = 1, ..., M)$ von elektrischen Kontakten

- jedem Tripel ein Bit $b_l$ zuweisen, das nach Konvention definiert ist durch:

$$b_l = 1, \text{ falls } R_{ij} > R_{ik}$$

$$b_l = 0, \text{ falls } R_{ij} < R_{ik}$$

wobei $R_{ij}$ und $R_{ik}$ elektrische Widerstände sind, die den Kontakt $C_i$ mit den Kontakten $C_j$ bzw. $C_k$ verbinden,
- den Widerstandsschlüssel (Kr, KA, KS) in Form einer geordneten Folge aus M Bits $b_l$ konstruieren.

20. Gesicherte integrierte Schaltung nach Anspruch 19, dadurch gekennzeichnet, daß für jedes Tripel $(C_j, C_i, C_k)_l$ die Kontakte $C_j$ und $C_k$ vom Kontakt $C_i$ gleich beabstandet sind.

21. Gesicherte integrierte Schaltung nach einem der Ansprüche 19 oder 20, dadurch gekennzeichnet, daß die Mittel zum Bestimmen der Widerstandsschlüssel einerseits einen Bus, der eine Leitung $(L_1)$ auf einer ersten Spannung $V_{cc}$, eine Meßleitung $(L_2)$ und eine Leitung $(L_3)$ auf einer zweiten Spannung $V_{ss}$ enthält, und andererseits drei steuerbare analoge Ein/Aus-Schalter $(K_1, K_2, K_3)$ enthalten, die dazu bestimmt sind, jeden Kontakt $C_i$ mit einer der Leitungen $(L_1, L_2, L_3)$ zu verbinden.

22. Gesicherte integrierte Schaltung nach einem der Ansprüche 15 bis 21, dadurch gekennzeichnet, daß die Schicht (14) aus dem Material mit zufälligem, inhomogenen spezifischen elektrischen Widerstand von einem Metallschirm (15) bedeckt ist.

23. Gesicherte integrierte Schaltung nach einem der Ansprüche 15 bis 22, dadurch gekennzeichnet, daß das Material mit zufälligem, inhomogenen spezifischen elektrischen Widerstand ein Gemisch aus einer Tinte mit hohem spezifischen elektrischen Widerstand und aus einer Tinte mit niedrigem spezifischen elektrischen Widerstand ist.

**Claims**

1. Method for determining an encryption key associated with an integrated circuit having a memory plane, wherein said method comprises the following stages :

   (a) embodying a matrix of N electric contacts $C_i$ on the surface of the memory plane,
   (b) placing on said matrix a layer of a random inhomogeneous electric resistivity material,
   (c) determining said encryption key, known as the resistive key Kr, on the basis of the random distribution of the electric resistances connecting the various electric contacts $C_i$ of the matrix.

2. Method according to claim 1, wherein the stage (c) further includes the determination on initialization of the integrated circuit of another resistive key KA, known as a stand-by key, which is written in a non-volatile memory of said circuit, and wherein said second resistive stand-by key KA is measured on each switching on of the integrated circuit and compared with the stored value of KA, the encryption key Kr being erased should a negative comparison occur.

3. Method according to claim 2, wherein the stage (c) further includes the determination on initialization of the integrated circuit of another resistive key KS, known as a stand-by key, which is written in a non-volatile memory of said circuit, and wherein a key KD is calculated from the resistive keys Kr and KS so that the encyption key Kr can be calculated from the keys KS and KD, the key KD being witten into the non-volatile memory of the integrated circuit.

4. Method according to any one of claims 1 to 3, wherein the integrated circuit posses its own information CI defining the list of the resistances to be used to determine said resistive keys.

5. Method according to any one of claims 1 to 4, wherein the list of the resistances to be used is established by the integrated circuit at the time of initialization according to the measured resistances.

6. Method according to claim 5, wherein said list is written into a non-volatile memory of the integrated circuit.

7. Method according to claim 6, wherein, after initialization of the integrated circuit, any entering of lists in said non-volatile memory is inhibited.

8. Method according to any one of claims 5 to 7, wherein said list comprises resistances with values sufficiently distant from one another.

9. Method according to any one of claims 5 to 7, wherein said list comprises resistances with values of the same order of magnitude.

10. Method according to any one of claims 5 to 7, wherein said list comprises resistances with values contained within a given range.

11. Method according to any one of claims 2 to 10, wherein the stage (c) for determining said resistive keys, after having defined a set of M triplets of electric contacts, consists of:

- allocating to each triplet a bit $b_1$ conventionally defined by:

$$b_l = 1 \text{ if } Rij > Rik$$

$$b_l = 0 \text{ if } Rij < Rik$$

Rij and Rik being the electric resistances connecting the contact Ci to the contacts Cj and Ck respectively;
- construct the resistive key in the form of an ordered sequence of M bits $b_l$.

12. Method according to claim 11, wherein for each triplet the contacts Cj and Ck are equidistant from the contact Ci.

13. Method according to any one of claims 1 to 12, wherein following stage (b) it comprises a stage consisting of placing a metallic screen on said material random inhomogeneous electric resistivity layer.

14. Method according to any one of claims 1 to 13, wherein said random inhomogeneous electric resistivity layer is embodied by mixing an ink with low electric resistivity with an ink with high electric resistivity.

15. Rendered secure integrated circuit and having a memory plane, wherein it comprises a matrix of N electric contacts Ci on the surface of said memory plane, a layer of a random inhomogeneous electric resistivity material placed on said matrix, and means for determining an encryption key on the basis of the random distribution of the electric resistances connecting the various electric contacts Ci of the matrix.

16. Rendered secure integrated circuit according to claim 15, wherein said determination means are suitable for determining on initialization of said circuit an encryption key Kr known as a resistive key.

17. Rendered secure integrated circuit according to claim 16, wherein said determination means are also suitable for determining on initialization of said circuit another resistive key Ka known as an alarm key so as to implement the method according to claim 2.

18. Rendered secure integrated circuit according to claim 16 or 17, wherein said determination means are also able to determine on initialization of the circuit another resistive key Ks known as a stand-by key for implementing the method according to claim 3.

19. Rendered secure integrated circuit according to any one of claims 15 to 18, wherein said means for determining said resistive keys, after having defined a set of M triplets of electric contacts, are able to:

- allocate to each triplet a bit $b_l$ conventionally defined by:

$$b_l = 1 \text{ if } Rij > Rik$$

$$b_l = 0 \text{ if } Rij < Rik$$

Rij and Rik being the electric resistances connecting the contact Ci to the contacts Cj and Ck respectively,
- construct the resistive key in the form of an ordered sequence of M bits $b_l$.

20. Rendered secure integrated circuit according to claim 19, wherein for each triplet, the contacts Cj and Ck are equidistant from the contact Ci.

21. Rendered secure integrated circuit according to claim 19 or 20, wherein said means for determining the resistive keys firstly comprise a bus including a line to with a first voltage Vcc, a measuring line and a line with a third voltage Vss, and secondly three controllable analog switches for connecting each contact Ci to one of the lines.

22. Rendered secure integrated circuit according to any one of claim 15 to 21, wherein said random inhomogeneous electric resistivity material layer is covered with a metallic screen.

23. Rendered secure integrated circuit according to any one of claims 15 to 22, wherein said random inhomogeneous electric resistivity material is a mixture of an ink with high electric resistivity and an ink with low electric resistivity.

FIG. 1

FIG. 2

FIG. 3

FIG. 4